# EUROPEAN PATENT APPLICATION

(11) **EP 4 760 152 A1**
(43) Date of publication of application: **17.06.2026**
(21) Application number: 25215124.6
(22) Date of filing: 12.11.2025
(51) Int. Cl.: F23R 3/20, F02K 3/10, F02K 3/11

(54) **REHEAT ASSEMBLY FOR A GAS TURBINE ENGINE**

(30) Priority: 12.12.2024 GB 202418200
(71) Applicant: Rolls-Royce plc, London N1 9FX (GB)
(72) Inventor: Powell, Ashley J, Derby, DE24 8BJ (GB); Romero, Eduardo, Derby, DE24 8BJ (GB); Wilkinson, Andrew, Derby, DE24 8BJ (GB)
(74) Representative: Rolls-Royce plc

(57) **Abstract**

The foregoing describes a reheat assembly (300) for a gas turbine engine (100). The reheat assembly (300) comprises:
a support duct section (321') comprising a core side (322') for facing a core reheat region (232), and a bypass side for facing a bypass reheat region (231); a support duct (21') comprising a plurality of circumferentially spaced inlets (380), each inlet (380) being configured to communicate the bypass reheat region (231) with the core reheat region (232);
a fuel supply system (360) comprising a plurality of bypass fuel injection ports (363), each bypass fuel injection port (363) being associated with an inlet (380) of the plurality of inlets (380); wherein each bypass fuel injection port (363) is configured to discharge fuel into the bypass reheat region (231) for transit through the associated inlet into the core reheat region (232).

## Description

### CROSS REFERENCE TO RELATED APPLICATIONS

This represents the first application directed towards the subject-matter.

### FIELD

This disclosure relates to a reheat assembly for a gas turbine engine, the reheat assembly comprising a vaporiser. This disclosure further relates to: a gas turbine engine comprising such a reheat assembly, and an aircraft comprising such a gas turbine engine.

### BACKGROUND

Conventionally, a reheat assembly may be provided to a gas turbine engine for the purpose of providing increased thrust. A reheat assembly increases thrust by injecting fuel into the exhaust. The fuel is dispersed within the airflow in the exhaust to form a fuel-air mixture prior to being entrained into a wake of a flameholder. The fuel-air mixture combusts within the wake forming a flame. The heat released by the flame heats the airflow in the exhaust to provide the required additional thrust.

In current engines, airflow is split into a core component and a bypass component. The core component is directed through a support duct and the bypass component is directed through a jet pipe that extends over the support duct. Gases from the bypass and core components are mixed in a combustion zone where fuel is burned. The area which controls the flow of bypass gas into the combustion zone is set by a gap between the trailing edge of the support duct and the inner diameter of a screech damper. This area also locates the injection points of fuel into the bypass gasses. The fuel injection is provided by bypass spray bars, which are a series of flat fan atomisers, spraying fuel axially rearwards into the jet pipe.

Due to the assembly tolerance of the independent components, this size of this area can be difficult to control without the need for trimming features to be assembled to the screech damper. Control of the size of this area is required for the correct metering of fuel and for control of the fuel to air ratio to support the combustion process, as well as to ensure a sufficient amount of bypass air is available for cooling the downstream components.

### SUMMARY

According to a first aspect there is provided a reheat assembly for a gas turbine engine, the reheat assembly comprising:
a support duct section comprising a core side for facing a core reheat region, and a bypass side for facing a bypass reheat region; the support duct comprising a plurality of circumferentially spaced inlets, each inlet being configured to communicate the bypass reheat region with the core reheat region;
a fuel supply system comprising a plurality of bypass fuel injection ports, each bypass fuel injection port being associated with an inlet of the plurality of inlets; wherein each bypass fuel injection port is configured to discharge fuel into the bypass reheat region for transit through the associated inlet into the core reheat region.

In an embodiment, each inlet comprises a chute that extends through the support duct section at an oblique angle to an axial direction of the support duct.

In an embodiment, the chute has an upstream end that opens into the bypass reheat region and a downstream end that opens into the core reheat region.

In an embodiment, the bypass fuel injection ports comprise a nozzle for discharging the fuel, wherein the nozzle is disposed in the chute and is configured to discharge the fuel directly into the chute.

In an embodiment, the nozzles are connected to a fuel supply by a pipe, each pipe comprising an oblique portion that is coaxial with the chute.

In an embodiment, the reheat assembly further comprises a screech damper disposed in coaxial arrangement with the support duct section.

In an embodiment, the screech damper is located downstream of the fuel injection ports and inlets.

In an embodiment, the reheat assembly further comprises a plurality of circumferentially spaced flame holders that each extend radially into the core reheat region from the core side of the support duct.

In an embodiment, each bypass fuel injection port and associated inlet is disposed in the circumferential plane of a corresponding flame holder.

In an embodiment, the flameholders are located downstream of the fuel injection ports and inlets.

In an embodiment, the flameholders are located upstream of the screech damper. According to a second aspect there is provided a gas turbine engine comprising: a reheat assembly in accordance with the first aspect;

In an embodiment, the gas turbine engine further comprises a jet pipe and a support duct that extends in coaxial arrangement within the jet pipe to surround rotating machinery; wherein the support duct section is a section of the support duct downstream of the rotating machinery.

According to a third aspect, there is provided an aircraft comprising a gas turbine engine in accordance with the second aspect.

### BRIEF DESCRIPTION OF THE DRAWINGS

Embodiments will now be described by way of example only with reference to the accompanying drawings, in which:
FIG. 1 is a simplified top view of an aircraft comprising an airframe and a gas turbine engine;
FIG. 2 is a sectional side view of a gas turbine engine;
FIG. 3 is a sectional side view of a reheat assembly of the gas turbine engine;
FIG. 4 is a sectional side view a fuel supply system of the reheat assembly; and
FIG. 5 is a perspective view a bypass fuel injection port of the fuel supply system.

### DETAILED DESCRIPTION

### Aircraft

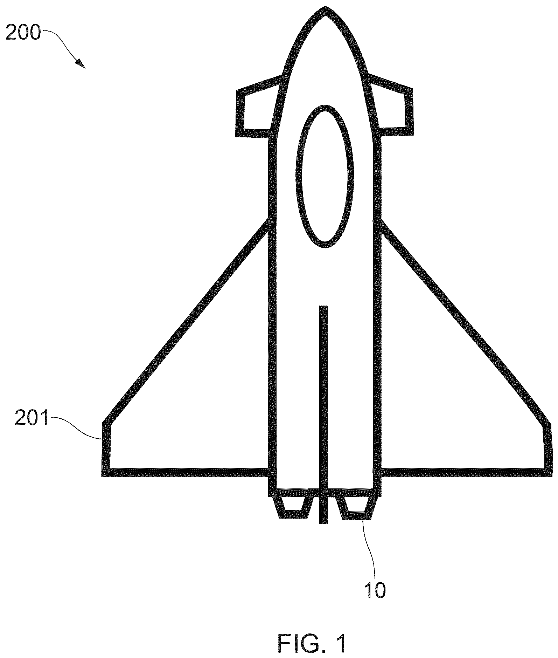

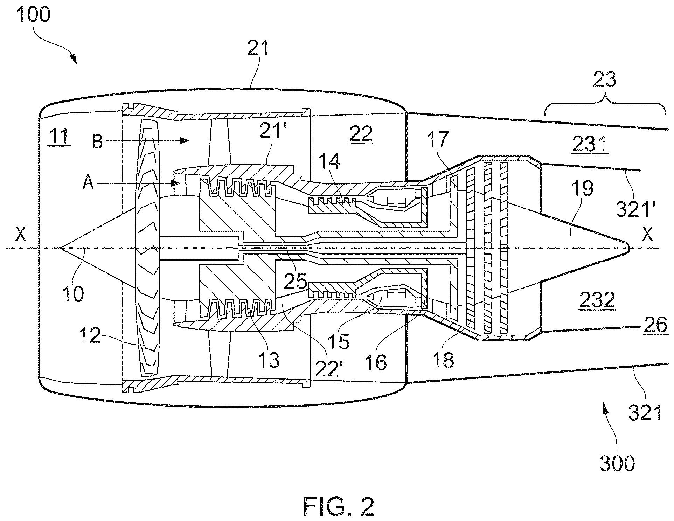

FIG. 1 shows a simplified and schematic view of an aircraft 200 comprising an airframe 201 and a gas turbine engine 100. The gas turbine engine 100 may be in accordance with the gas turbine engine 100 described below with reference to FIG. 2.

### Gas turbine engine

FIG. 2 shows a ducted fan gas turbine engine 100 (hereinafter 'engine 100') having a principal rotational axis X-X. The engine 100 comprises a jet pipe 21 that extends along the axis X-X to define an airflow passageway. The airflow passageway comprises a bypass airflow path 22 (hereafter bypass 22) and a core airflow path 22' (hereafter core 22'). A support duct 21' extends in coaxial arrangement within the jet pipe 21 and surrounds a central shaft on which is mounted rotating machinery. The core 22' is formed between the central shaft 25 and the support duct 21', while the bypass 22 is formed between the support duct 21' and the jet pipe 21. The leading edge of the support duct 21 and the leading edge of the jet pipe 21' are offset, with the leading edge of the support duct 21' being located downstream of the leading edge of the jet pipe 21. The region in between the leading edges of the jet pipe 21 and support duct 21' will herein be referred to as the air intake 11.

Within the air intake 11, the rotating machinery comprises a nose cone 10 and a propulsive fan 12 downstream of the nose cone 10. Within the support duct 21', the rotating machine comprises, from upstream to downstream, an intermediate pressure compressor 13, a high-pressure compressor 14, a high-pressure turbine 16, an intermediate pressure turbine 17, a low-pressure turbine 18 and a tail cone 19. The tail cone 19 may extend downstream beyond the trailing edge of the support duct 21', or as illustrated it may terminate upstream of the trailing edge. A combustion chamber 15 is disposed within the support duct 21' between the high-pressure compressor 14 and the high-pressure turbine 16.

During operation, air entering the intake 11 is accelerated by the propulsive fan 12 to produce an airflow that is divided into a core flow A that is directed through the core 22' and a bypass flow B that is directed through the bypass 22. The intermediate pressure compressor 13 and high pressure compressor 14 sequentially and progressively compress the core flow A before it is delivered to the combustion chamber 15. In the combustion chamber 15 the core flow A is mixed with fuel and combusted forming hot combustion products that expand through the high, intermediate and low-pressure turbines 16, 17, 18 to drive the rotating machinery. With a portion of heat expended in the turbines 16, 17, 18, the combustion products are then exhausted over the tail cone 19 and out of the jet pipe 21.

### Reheat assembly

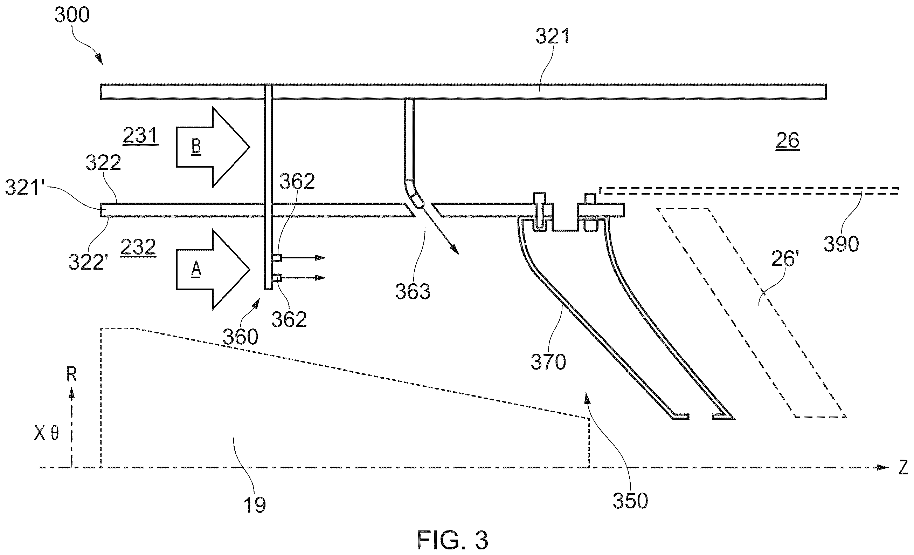

The gas turbine engine 100 further comprises a reheat assembly 300 as shown in FIG. 3. The reheat assembly 300 has an axial direction Z, a radial direction R and a circumferential direction θ. Because FIG. 3 is a sectional side view of the reheat assembly 300, the circumferential direction θ is defined through the plane of the page, whereas the axial direction Z and the radial direction R are defined according to the direction of the corresponding coordinate arrows provided by FIG. 3. The reheat assembly 300 is configured such that, when the reheat assembly 300 is incorporated into a gas turbine engine, the axial direction Z of the reheat assembly 300A aligns with the principal and rotational axis X-X. The jet pipe 21 defines the axial direction Z, the radial direction R and the circumferential direction θ of the reheat assembly 300. As used herein, the term 'circumferential plane' describes a plane defined by the axial direction Z and the radial direction R.

The reheat assembly 300 forms part of the engine 100 spanning a region downstream of the low-pressure turbine 18. This region is referred to herein as the reheat region 23. The reheat region 23 comprises both parts of the bypass 22 (herein the bypass reheat region 231) and the core 22' (herein the core reheat region 232). The reheat assembly 300 is configured to introduce fuel into the core reheat region 232 and, in some embodiments, also into the bypass reheat region 231. A portion of the fuel is combusted to provide additional propulsive thrust.

The section of the jet pipe 21 that surrounds the bypass reheat region 231 is herein referred to as the bypass section 321. The section of the support duct 21' that surrounds the core reheat region 232 is herein referred to as the support duct section 321'. The support duct section 321' and/or the bypass section 321 may be separable from the remainder of the support duct 21' and the jet pipe 21, respectively, thereby forming a separable part of the engine 100. Alternatively, the support duct section 321' and/or the bypass section 321 may be integrally formed with jet pipe 21 and support duct 21'. By providing the sections 321, 321' as separable components, the reheat assembly 300 may be more easily removed for maintenance, repair or replacement.

The trailing edge of the jet pipe 21 is offset downstream of the trailing edge of the support duct 21'. The region in between the trailing edge of the support duct 21' and the trailing edge of the jet pipe 21 is herein referred to as an afterburning region 26.

A screech damper 390 extends coaxially from the trailing edge of the support duct 21' over the afterburning region 26. The screech damper 390 is a pipe shaped section with a perforated circumferential wall that operates to dampen vibrations caused by combustion. The screech damper 390 is a separately formed component to the support duct 21' and partially overlaps the support duct 21' (the support duct section 321' of the illustrated embodiment). The screech damper 390 is attached to the support duct 21' in this overlapping region.

The reheat assembly 300 comprises a plurality of reheat arrangements 350. Each reheat arrangement 350 is configured to enable the ignition of, and promote the stable formation of, a flame within the reheat assembly 300. The plurality of reheat arrangements 350 comprise circumferentially distributed elongate flame holders 370 that extend radially inward from the core side 322' of the support duct section 321'; and a fuel supply system 360 associated with each flameholder 370. Each fuel supply system 360 is in the same circumferential plane as a flameholder 370, such that each fuel supply system 360 is substantially circumferentially aligned with a flameholder 370.

Each of the plurality of reheat arrangements 350 and/or each component of each reheat arrangement 350 may be independently mounted to the support duct section 321' so that they can be removed and replaced easily without requiring unnecessary removal and replacement of any other components.

Each fuel supply system 360 comprises a core fuel injection port 362 and a bypass fuel injection port 363. The fuel injection ports 362, 363 are located upstream of the flame holder 370. The fuel supply system 360 and flame holder 370 are each separately mounted to the support duct section 321'. The core fuel injection port 362 is configured to discharge a flow of fuel into the core reheat region 232 for mixing with the core flow A. The bypass fuel injection port 363 is configured to discharge a flow of fuel into the bypass flow B for mixing with the core flow A.

In the afterburning region 26 the core flow A from the core reheat region 232 and the bypass flow B from the bypass reheat region 231 mix. The flame holders 370 are configured to produce a wake stabilised region 26' in the afterburning region 26 in which fuel injected into the core reheat region 232 and the bypass reheat region 231 is ignited to provide the additional thrust.

### Bypass fuel injection

Each bypass fuel injection port 363 is associated with an inlet 380 in the support duct section 321'. The bypass fuel injection ports 363 and their associated inlets 380 are circumferentially spaced around the support duct section 321' so that each bypass fuel injection port 363 and associated inlet 380 is disposed in the circumferential plane of a corresponding flame holder 370.

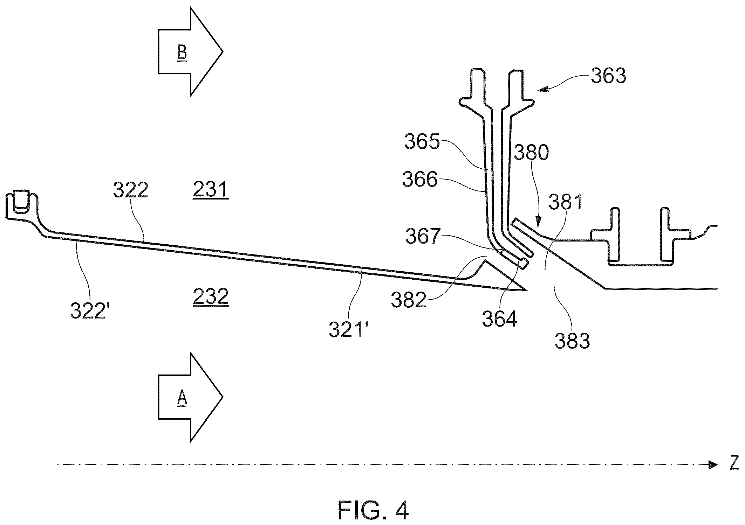

FIG. 4 shows detail of the fuel supply system 360 with reference to an illustrated exemplary bypass fuel injection port 363 and inlet 380, however the following is applicable to each bypass fuel injection ports 363 and each inlet 380 of the reheat assembly 300.

The inlet 380 communicates the bypass reheat region 231 with the core reheat region 232 to direct a portion of the bypass flow B into the core flow A. The inlet 380 comprises a chute 381 that extends at an oblique angle to the axial direction Z. The chute 381 has an upstream end 382 that opens into the bypass reheat region 231 and a downstream end 383 that opens into the core reheat region 232. The angle of the inlet 380 is configured to draw bypass flow B into the chute 381 for redirection into the core flow A.

The bypass fuel injection port 363 comprises a nozzle 364 that is connected to a fuel supply (not shown) by a pipe 365. The nozzle 364 is disposed in the chute 381 and is configured to discharge fuel from the fuel supply directly into the chute 381. **In** this way fuel is entrained into the bypass flow B passing through the chute 381, mixing with the bypass flow B for delivery into the core reheat region 232.

In the illustrated embodiment, the pipe 365 comprises a radial portion 366 and an oblique portion 367. The oblique portion 367 extends through the chute 381 to connect the nozzle 364 to the radial portion 366. The radial portion 366 extends from the oblique portion 367 and through the bypass reheat region 231 for connection with the fuel supply. In the illustrated embodiment the oblique portion 367 is coaxial with the chute 381, but in some embodiments may extend at a different angle to the chute 381.

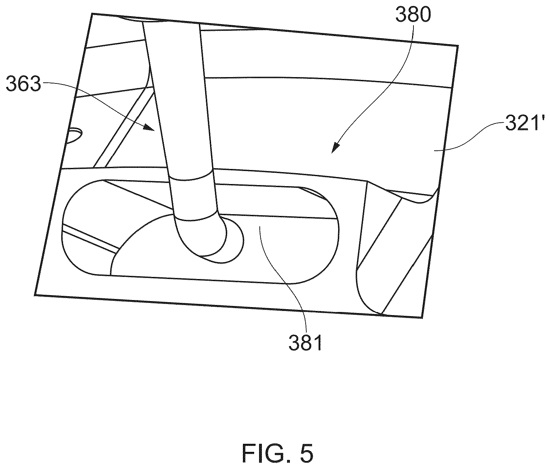

FIG. 5 shows further detail of the bypass fuel injection port 363 and the inlet 380. The chute 381 comprises a constant cross section along its length. By 'constant cross section', it is meant that the profile of the chute is a straight projection between the upstream and downstream ends 382, 383. This means that the area available for bypass flow is constant over the length of the chute 381 between the upstream and downstream ends 382, 383. However, it will be appreciated that the cross section may instead vary along the length of the chute 381, depending on the design requirement. The area of the chute profile determines the volume of bypass flow B that is redirected into the core flow A. The larger the area, the more bypass flow B that is redirected into the core flow A. Similarly, the number and circumferential spacing of inlets 380 around the support duct section 321' affects the total area for bypass flow B (also herein 'bypass flow area') to pass into the core reheat region 232. In other words, the openings provided by the inlets 380 can be sized as a group to the requirements of the engine, to produce a bypass flow area in line with the bypass ratio for the particular application. For example, it is important to control the bypass flow area and bypass ratio within the engine 100 depending on upstream and downstream cooling requirements (i.e. if the downstream components require additional cooling, this may result in a reduced amount of bypass flow being available to support the reheat combustion). Typically, this is done by control of a radial gap between the screech damper 390 and the overlapping support duct section 321' to allow bypass flow B to bleed between the two. If the bypass ratio is to be reduced (i.e. the amount of bypass flow B is reduced relative to the amount of core flow A), it would be difficult to accurately control the radial gap between the screech damper 390 and support duct section 321', without significant assembly and manufacturing tolerances being required to be tightly controlled or application of trimmers being used.

By controlling the bypass flow area using a series of circumferentially spaced inlets 380 in the support duct section 321', the reheat assembly 300 described herein detaches the requirement of controlling the total area through other means, such as the alignment and control of the gap between the support duct 21' and screech damper 390. As the inlets 380 are independent features and do not require a relationship with an additional component to control the total area, the inlets 380 can be axially located to optimise the way in which the bypass air is offered into the jet pipe 21, as well as the fuel injection angle being optimisable to support the fuel and air mixing where necessary. The reheat assembly 300 described herein therefore provides a solution that is easier to manufacture to a higher degree of precision for improved reheat efficiency. This solution of introducing inlets 380 into the support duct section 321' allows the metering of bypass flow B to be controlled and patterned independently of the screech damper 390 fitment, as well as allowing the reheat design to position these features axially in the optimum location. It would otherwise be difficult to control the area for metering bypass flow B when the bypass ratio is reduced to support additional engine functions and cooling requirements.

Another advantage of the solution described herein is a reduced burn length. By reduced burn length, it is meant the time to burn the fuel and air can be reduced through axially locating the inlets 380 upstream of the flameholder 370 (as illustrated), as opposed to being downstream in previous designs.

While in the embodiment illustrated by FIG. 3 and described above the bypass fuel injection ports 363 and associated inlets 380 are shown upstream of the flameholder 370, it will be appreciated that the invention is not limited by this arrangement. For example, in another unillustrated embodiment the flameholders 370 may be positioned upstream of the fuel injection ports 363 and inlets 380. In addition, in embodiments the flameholders 370 may be disposed out of circumferential alignment with the fuel injection ports 363 and inlets 380, so that the flameholders 370 are circumferentially spaced from the fuel injection ports 363 and inlets 380. In addition, the flameholders 370 may be dispensed with entirely so that a reheat assembly 300 is provided without flameholders 370.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A reheat assembly for a gas turbine engine, the reheat assembly comprising:
a support duct section comprising a core side for facing a core reheat region, and a bypass side for facing a bypass reheat region; the support duct comprising a plurality of circumferentially spaced inlets, each inlet being configured to communicate the bypass reheat region with the core reheat region;
a fuel supply system comprising a plurality of bypass fuel injection ports, each bypass fuel injection port being associated with an inlet of the plurality of inlets; wherein each bypass fuel injection port is configured to discharge fuel into the bypass reheat region for transit through the associated inlet into the core reheat region, wherein each inlet comprises a chute that extends through the support duct section at an oblique angle to an axial direction of the support duct.

2. A reheat assembly according to claim 1, wherein the chute has an upstream end that opens into the bypass reheat region and a downstream end that opens into the core reheat region.

3. A reheat assembly according to claim 1 or claim 2, wherein the bypass fuel injection ports comprise a nozzle for discharging the fuel, wherein the nozzle is disposed in the chute and is configured to discharge the fuel directly into the chute.

4. A reheat assembly according to claim 3, wherein the nozzles are connected to a fuel supply by a pipe, each pipe comprising an oblique portion that is coaxial with the chute.

5. A reheat assembly according to any preceding claim further comprising a screech damper disposed in coaxial arrangement with the support duct section.

6. A reheat assembly according to claim 5, wherein the screech damper is located downstream of the fuel injection ports and inlets.

7. A reheat assembly according to any preceding claim further comprising a plurality of circumferentially spaced flame holders that each extend radially into the core reheat region from the core side of the support duct.

8. A reheat assembly according to claim 7, wherein each bypass fuel injection port and associated inlet is disposed in the circumferential plane of a corresponding flame holder.

9. A reheat assembly according to claim 7 or claim 8, wherein the flameholders are located downstream of the fuel injection ports and inlets.

10. A reheat assembly according to claim 9 when dependent on claim 6, wherein flameholders are located upstream of the screech damper.

11. A gas turbine engine comprising the reheat assembly of any preceding claim.

12. A gas turbine engine according to claim 11 further comprising a jet pipe and a support duct that extends in coaxial arrangement within the jet pipe to surround rotating machinery; wherein the support duct section is a section of the support duct downstream of the rotating machinery.

13. An aircraft comprising the gas turbine engine of claim 11 or claim 12.
